**Europäisches Patentamt**

**European Patent Office**

**Office européen des brevets**

(19)

(11) Veröffentlichungsnummer: **0 442 426 A2**

## (12) EUROPÄISCHE PATENTANMELDUNG

(21) Anmeldenummer: **91101891.9**

(22) Anmeldetag: **11.02.91**

(51) Int. Cl.⁵: **C08L 21/00**, B29D 30/52, C08K 5/31, C08K 5/47, C08K 5/40, C08K 5/39

(30) Priorität: **12.02.90 DE 4004205**

(43) Veröffentlichungstag der Anmeldung:
**21.08.91 Patentblatt 91/34**

(84) Benannte Vertragsstaaten:
**DE ES FR GB IT**

(71) Anmelder: **GUMMIWERK KRAIBURG GMBH & CO.**
**Teplitzer Strasse 20**
**W-8264 Waldkraiburg(DE)**

(72) Erfinder: **Schmidt, Fritz**
**Johann-Strauss-Strasse 18**
**W-8264 Waldkraiburg(DE)**
Erfinder: **Maier, Peter**
**Haselbach 15**
**W-8261 Aschau(DE)**
Erfinder: **Theivogt, Joachim**
**Lindenstrasse 34**
**W-8261 Jettenbach(DE)**
Erfinder: **Schmidt, Thorsten**
**Blumenstrasse 4**
**W-8264 Waldkraibug-Niederndorf(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**W-8000 München 86(DE)**

(54) **Verfahren zur Reifenrunderneuerung.**

(57) Zur Runderneuerung von Fahrzeugreifen durch Auftragen einer ein Vulkanisationssystem enthaltenden Gummimischung auf die Karkasse und Vulkanisation und Bindung derselben an der Karkasse unter Anwendung von Wärme und Druck verwendet man eine Laufflächenmischung auf Basis von Styrol-Butadienkautschuk oder/und Polybutadien oder/und Naturkautschuk, die ein Vulkanisationssystem enthält, welches neben Schwefel ein Beschleunigersystem umfaßt, das mindestens zwei Substanzen aus den Gruppen der Thiazole, Guanidine, Thiurame und Dithiocarbamate, welche nicht der gleichen Gruppe angehören, in einer Gesamtmenge von 2 bis 6 Gew.-Teile je 100 Gew.-Teile Polymermischung enthält.

## VERFAHREN ZUR REIFENRUNDERNEUERUNG

Die Erfindung betrifft ein Verfahren zur Reifenrunderneuerung.

Bei der Runderneuerung von Reifen, insbesondere für Kraftfahrzeuge, wird die Lauffläche und die Seitenwandplatte von abgefahrenen Reifen erneuert. Dies kann durch Heißvulkanisation oder durch Kaltvulkanisation erfolgen.

Bei der Heißvulkanisation werden der aufzubringende eigentliche Laufstreifen und die Seitenwandplatten nicht in vorvulkanisierter Form eingesetzt, sondern er wird erst während der Runderneuerung gleichzeitig mit der Herstellung der Verbindung des Laufstreifens mit der Karkasse mitvulkanisiert.

Bei der Kaltvulkanisation werden bereits vorvulkanisierte Laufstreifen eingesetzt und es muß lediglich eine Verbindung zwischen diesem bereits vorvulkanisierten Laufstreifen und der Karkasse hergestellt werden. Diese Verbindung wird durch Vulkanisation einer Zwischenschicht aus einer speziell dafür konzipierten Kautschukmischung hergesellt. Die Kaltvulkanisation wird als Autoklavenvulkanisation durchgeführt, bei der keine Formen nötig sind. Die Vulkanisationstemperatur liegt vorzugsweise im Bereich von 95 bis 105 °C, in Sonderfällen bis 150 °C. Die Vulkanisationszeiten betragen im Durchschnitt ca. 1,5 bis 2,5 h für PKW-Reifen und ca. 1,5 bis 5 h für LKW-Reifen, je nach deren Dimension, der Masse der vorvulkanisierten Laufstreifen und der angewandten Vulkanisationstemperatur.

Die Heißvulkanisation wird als Pressenvulkanisation (Pressenheizung) unter Verwendung von Formen durchgeführt (vgl. z.B. Ullmann's Encyklopädie der Technischen Chemie, Band 13, S. 696). Es werden unvulkanisierte Laufstreifen eingesetzt. Die übliche Vulkanisationstemperatur liegt im Bereich von 145 bis 160 °C, und die Vulkanisationszeiten liegen im Bereich von 24 bis 40 Minuten für PKW-Reifen und bei 55 bis 130 Minuten für LKW-Reifen.

Aufgabenstellung der vorliegenden Erfindung ist es, die für die Runderneuerung von Reifen durch Heißvulkanisation benötigte Zeit und/oder die Vulkanisationstemperatur zu verringern, d.h. die Vulkanisationszeiten bei zumindest gleichen Temperaturen und/oder die Vulkanisationstemperaturen bei zumindest gleichen Vulkanisationszeiten deutlich zu verringern, mit dem Ziel einer insgesamt wirtschaftlicheren und energiesparenderen Verfahrensweise und wobei die Eigenschaften der runderneuerten Reifen zumindest denen der nach den bisher üblichen Runderneuerungsverfahren erhaltenen Reifen entsprechen.

Diese Aufgabenstellung wird erfindungsgemäß durch ein Verfahren gelöst, bei dem man Mischungen mit bestimmten Polymerbasiszusammensetzungen in Kombinationen mit bestimmten Beschleunigersystemen verwendet.

Die Vulkanisation ist eine Vernetzungsreaktion, wodurch eine Umwandlung von Kautschukmischungen aus dem vorwiegend plastischen in den gummielastischen Zustand erreicht wird; dies geschieht durch die Anwendung der sogenannten Vulkanisationsmittel, insbesondere von Schwefel, wobei die Doppelbindungen gelöst und Schwefel-Brückenbindungen zu den Nachbarmolekülen geknüpft werden. Schwefel ist aber ein träges Vulkanisationsmittel, und man benötigt zur Vulkanisation mit Schwefel allein hohe Schwefeldosierungen, hohe Vulkanisationstemperaturen und lange Vulkanisationszeiten und erhält nur eine unbefriedigende Vernetzungsausbeute sowie ungenügende Festigkeits-und Alterungseigenschaften der Vulkanisate. Erst durch die Verwendung von Vulkanisationsbeschleunigern erreicht man wirtschaftliche Vulkanisationszeiten und Vulkanisate mit guten Eigenschaften.

Bei den Vulkanisationsbeschleunigern unterscheidet man anorganische Vulkanisationsbeschleuniger, z.B. Magnesiumoxid, Calciumhydroxid, Bleiglätte oder Antimonsulfide und organische Vulkanisationsbeschleuniger, wobei die anorganischen Vulkanisationsbeschleuniger in der Regel gegenüber den organischen Vulkanisationsbeschleunigern in ihrer Bedeutung stark zurücktreten. Die Verwendung organischer Vulkanisationsbeschleuniger hat überhaupt erst die Verkürzung der Vulkanisationszeiten auf ein wirtschaftlich vertretbares Maß möglich gemacht; sie erlaubt ferner die Anwendung verhältnismäßig niedriger Vulkanisationstemperaturen und damit die Vermeidung von Hitzeschädigungen des Kautschuks, was sich positiv auf die Alterungsbeständigkeit der Vulkanisate auswirkt. Durch eine abgestufte Dosierung und Kombination verschiedener Beschleuniger wird die für Praxiserfordernisse außerordentlich wichtige Regelung der An-und Ausvulkanisationsgeschwindigkeit ermöglicht. Durch die Vulkanisationsbeschleuniger wird auch die zur Erzielung optimaler Vulkanisateigenschaften erforderliche Schwefelmenge herabsetzt, da der Schwefel besser zur Ausbildung von Vernetzungsbrücken ausgenutzt wird und weniger durch unerwünschte Nebenreaktionen verloren geht. Dies führt zu einer wesentlichen Verbesserung der Alterungsbeständigkeit.

Als allgemein gebräuchliche organische Vulkanisationsbeschleuniger sind zu nennen: Thiazole, Sulfenamide, Thiocarbamylsulfenamide, Triazine, Guanidine, Thiophosphate, Thiurame, Dithiocarbamate, Xanthogenate, Aldehydamin-Kondensationsprodukte, Amine und Thioharnstoffe (vgl. Ullmann l.c., S. 640-643).

Zur Entwicklung neuer Beschleunigersysteme für die Reifenrunderneuerung wurden von der einschlägigen Industrie intensive Forschungs- und Entwicklungsarbeiten durchgeführt und die verschiedensten, zum Teil geheimgehaltenen Vulkanisationssysteme verwendet. Trotzdem ist es bisher nicht gelungen, die Zeit für die Vernetzungsreaktion und damit die Vulkanisationszeit wesentlich zu verringern. Es ist zwar möglich, kürzere Vulkanisationszeiten auch mit bisher üblichen Beschleunigersystemen zu erzielen, wenn man ihre Mengen entsprechend erhöht, dann werden aber die Produkteigenschaften wie Lagerfähigkeit und mechanische Eigenschaften zu sehr verschlechtert.

Als Maß für die Beendigung der Vernetzungsreaktion dient der Umsatzgrad 90 %, der sogenannte T90-Wert (der nach DIN 53529 auf den Vulkameter ermittelt wird); dieser Wert liegt bei den derzeit in der Heißerneuerung üblichen Reifenmischungen bei 150 °C in einem Bereich zwischen 7 und 15 Minuten.

Um bei vergleichbaren Reifenherstellungszeiten die Temperatur und/oder bei gleicher Temperatur die Heizzeiten deutlich verringern zu können, müssen deshalb die T90-Werte entsprechend geringer sein; um z.B. bei 130 °C vergleichbare Reifenheizzeiten wie bei 150 °C zu erreichen, dürfen die T90-Werte nur etwa halb so hoch sein. Mit dem erfindungsgemäßen Verfahren ist eine solche deutliche Verringerung der T90-Werte möglich.

Der Erfindung liegt daher die Aufgabe zugrunde, die geschilderten Nachteile des Standes der Technik zu beseitigen und ein Verfahren zur Reifenrunderneuerung zu schaffen, welches bei Aufrechterhaltung der bisher erreichten Produktqualität, die bei einer bestimmten Heiztemperatur benötigte Zeit deutlich zu verringern gestattet bzw. bei Aufrechterhaltung der Heizzeiten die benötigte Temperatur erniedrigt.

Gelöst wird diese Aufgabe erfindungsgemäß durch ein Verfahren zur Runderneuerung von Fahrzeugreifen durch Auftragen einer ein Vulkanisationssystem enthaltenden Gummimischung auf die Karkasse und Vulkanisation und Bindung derselben an der Karkasse unter Anwendung von Wärme und Druck, welches dadurch gekennzeichnet ist, daß man eine Laufflächenmischung auf Basis von Styrol-Butadienkautschuk oder/und Polybutadien oder/und Naturkautschuk verwendet, die ein Vulkanisationssystem enthält, welches neben Schwefel ein Beschleunigersystem umfaßt, das mindestens zwei Substanzen aus den Gruppen der Thiazole, Guanidine, Thiurame und Dithiocarbamate, welche nicht der gleichen Gruppe angehören, in einer Gesamtmenge von 2 bis 6 Gew.-Teile je 100 Gew.-Teile Polymermischung enthält.

Bevorzugt wird beim Verfahren der Erfindung ein Beschleunigersystem verwendet, welches mindestens drei Substanzen, die nicht der gleichen Gruppe angehören, enthält.

Gemäß einer weiter bevorzugten Ausführungsform der Erfindung enthält das beim Verfahren der Erfindung verwendete Beschleunigersystem mindestens zwei Substanzen, die unter Dibenzothiazyldisulfid (MBTS), Diphenylguanidin (DPG), Tetramethylthiuramdisulfid (TMTD), Zink-N-diethyldithiocarbamat (ZDEC) ausgewählt sind.

Besonders bevorzugt werden im Rahmen der Erfindung Laufflächenmischungen verwendet, welche eine Gummimischung aus SBR, BR und NR aufweisen und als Beschleuniger MBTS und DPG sowie gegebenenfalls zusätzlich TMTD oder/und ZDEC enthalten. Eine weitere, besonders bevorzugte Zusammensetzung enthält als Gummibasis SBR und BR sowie MBTS, DPG und TMTD.

Die im erfindungsgemäßen Verfahren verwendeten Mischungen können zusätzlich weitere für derartige Rezepturen übliche Zusatzstoffe in den dafür üblichen Mengen enthalten, wie z.B. Ruß, Weichmacher, ZnO, Stearinsäure, Harze, Alterungs- und Ermüdungsschutzmittel, etc..

Mit den erfindungsgemäßen Gummimischungen lassen sich gegenüber bisher üblichen Mischungen wesentlich höhere Vulkanisationsgeschwindigkeiten (wesentlich kürzere T90-Werte) erzielen. Erfindungsgemäß können T90-Werte bei 150 °C unter 6 Minuten und vorzugsweise zwischen 2,5 und 5,5 Minuten erreicht werden.

Erfindungsgemäß sind z.B. die folgenden T90-Werte bei 150 °C möglich: für die Lauffläche maximal 4,2 Minuten, für die Seitenplatte max. 5,5 Minuten.

Gegenüber den bisherigen Verfahren ist deshalb eine deutliche Verringerung der Heiztemperatur und/oder der Heizzeit möglich, wodurch geringere Energiekosten, wesentlich höhere Standzeiten der Verschleißteile in der Reifenfertigung (z.B. Heizbälge, Heizschläuche), eine wesentlich geringere Karkassenschädigung beim Heizen, und eine geringere Schädigung der Gummi-Metall-Haftung in der Karkasse während der Vulkanisation möglich sind.

Unter sonst gleichen Bedingungen läßt sich erfindungsgemäß im allgemeinen die Temperatur der Heißvulkanisation unter Beibehaltung der gleichen Vulkanisationszeiten beispielsweise bei einer bisher bei 150 °C durchgeführten Arbeitsweise auf 130 °C herabgesetzt werden. Es kann wahlweise entweder eine niedrigere Vulkanisationstemperatur oder eine kürzere Vulkanisationsdauer erzielt werden, wobei beide Effekte auch vereinigt werden können, so daß man also bei einer etwas weniger herabgesetzten Temperatur trotzdem noch etwas kürzere Vulkanisationszeiten erreicht.

Die nachfolgenden Beispiele sollen nun die Erfindung näher veranschaulichen.

Die Beispiele 1 bis 5 zeigen die ganz bestimmten Polymerbasiszusammensetzungen und Beschleuni-

3

gersysteme für das erfindungsgemäße Verfahren und die damit erhältlichen T90-Werte, und die Vergleichsbeispiele den Stand der Technik und die dazu gehörigen T90-Werte; Beispiel 6 ist ein Beispiel für eine nach dem erfindungsgemäßen Verfahren eingesetzte Rezeptur.

Beispiele 1 - 5

Polymerbasiszusammensetzungen und Beschleunigersystem für das erfindungsgemäße Verfahren.

| Beispiel | 1 | 2 | 3 | 4 | 5 |
|---|---|---|---|---|---|
| **Polymerbasis in phr** | | | | | |
| SBR | 40 | 40 | – | 40 | 60 |
| BR | 30 | 30 | – | 20 | 40 |
| NR | 30 | 30 | 100 | 40 | – |
| **Schwefel in phr** | 1,6 | 1,6 | 2,2 | 1,2 | 2,3 |
| **Beschleuniger in phr** | | | | | |
| MBTS | 1 | 1 | 2 | 1 | 1 |
| MBT | – | 0,7 | – | – | – |
| DPG | 1 | 2 | 1,7 | 1 | 1,3 |
| TMTD | 0,2 | 0,1 | – | – | 0,2 |
| ZDEC | – | – | – | – | – |
| CTP | – | – | 0,1 | – | – |
| **T90 bei 150°C (Minuten)** | 3,5 | 3,8 | 4,2 | 5,5 | 4,0 |

Beispiel 6

Rezeptur für erfindungsgemäßes Verfahren:

|  | zum Beispiel | Gewichtsteile |
|---|---|---|
| Naturkautschuk | SIR 20 | 40 |
| BR | Buna CB 10 | 20 |
| SBR | Buna EM 1500 | 40 |
| Hocharomat. Weichmacher | Enerdex 65 | 15 |
| Ruβ | N375 | 50 |
| ZnO | ZnO RS | 3 |
| Stearinsäure |  | 0,5 |
| Antioxidant | IPPD | 2 |
| Alterungsschutz | TMQ | 1 |
| Lichtschutzwachs | Antilux 654 | 2 |
| Schwefel |  | 1,6 |
| Benzothiazolbeschleuniger | MBTS | 1,5 |
| Guanidinbeschleuniger | DPG | 1 |
| T90 bei 150°C (Minuten) |  | 4,7 |

Verwendete Abkürzungen:

| | |
|---|---|
| SBR | Styrol - Butadien - Kautschuk |
| BR | Polybutadien |
| NR | Naturkautschuk |
| MBTS | Benzothiazyldisulfid |
| MBT | 2 - Mercaptobenzothiazol |
| TBBS | Benzothiazyl-2-tert.-butyl-sulfenamid |
| CBS | Benzothiazyl-2-cyclohexyl-sulfenamid |
| DPG | Diphenylguanidin |
| TMTD | Tetramethylthiuramdisulfid |
| ZDEC | Zinkdiethyldithiocarbamat |
| CTP | N - Cyclohexylthiophthalimid |
| IPPD | N-Phenyl-N-(1.3-dimethylbutyl)-p-phenylendiamin |
| TMQ | 1.2- Dihydro-2.2.4-trimetylchinolin |

Vergleichsbeispiele 1- 4

Bisher übliche Kombinationen

5

| Polymerbasis | | | | |
|---|---|---|---|---|
| SBR | 100 | 70 | – | 40 |
| BR | – | 30 | 20 | 20 |
| NR | – | – | 80 | 40 |
| | | | | |
| Schwefel | 1,7 | 2 | 2 | 1,4 |
| | | | | |
| Beschleuniger | | | | |
| TBBS | 1,6 | – | – | – |
| CBS | – | 1,8 | 1,8 | 1 |
| DPG | 0,4 | – | – | – |
| TMTD | – | 0,2 | – | – |
| | | | | |
| T90 bei 150°C (Minuten) | 13 | 11 | 8 | 13 |

**Patentansprüche**

1. Verfahren zur Runderneuerung von Fahrzeugreifen durch Auftragen einer ein Vulkanisationssystem enthaltenden Gummimischung auf die Karkasse und Vulkanisation und Bindung derselben an der Karkasse unter Anwendung von Wärme und Druck,
   **dadurch gekennzeichnet,**
   daß man eine Laufflächenmischung auf Basis von Styrol-Butadienkautschuk oder/und Polybutadien oder/und Naturkautschuk verwendet, die ein Vulkanisationssystem enthält, welches neben Schwefel ein Beschleunigersystem umfaßt, das mindestens zwei Substanzen aus den Gruppen der Thiazole, Guanidine, Thiurame und Dithiocarbamate, welche nicht der gleichen Gruppe angehören, in einer Gesamtmenge von 2 bis 6 Gew.-Teile je 100 Gew.-Teile Polymermischung enthält.

2. Verfahren nach Anspruch,
   **dadurch gekennzeichnet,**
   daß das Beschleunigersystem mindestens zwei Substanzen enthält, die unter Dibenzothiazyldisulfid (MBTS), Diphenylguanidin (DPG), Tetramethylthiuramdisulfid (TMTD), Zink-N-diethyldithiocarbamat (ZDEC) ausgewählt sind.

3. Verfahren nach Anspruch 2,
   **dadurch gekennzeichnet,**
   daß das Beschleunigersystem MBTS, DPG und TMTD enthält und die Polymerbasis aus SBR, BR und NR besteht.

4. Verfahren nach Anspruch 2 oder 3,
   **dadurch gekennzeichnet,**
   daß das Beschleunigersystem zusätzlich N-Cyclohexylthiophtalimid CTP enthält.

5. Verfahren nach Anspruch 4,
   **dadurch gekennzeichnet,**
   daß das Beschleunigersystem zusätzlich ZDEC enthält.

6. Verfahren nach Anspruch 2,
   **dadurch gekennzeichnet,**
   daß das Beschleunigersystem aus MBTS und DPG besteht.